# EUROPÄISCHE PATENTSCHRIFT

(11) **EP 0 846 578 B1**
(45) Veröffentlichungstag und Bekanntmachung des Hinweises auf die Patenterteilung: **10.10.2001**
(21) Anmeldenummer: 97121099.2
(22) Anmeldetag: 01.12.1997
(51) Int. Cl.: B60C 11/12

(54) **Fahrzeugluftreifen**
Vehicle tyre
Bandage pneumatique pour véhicule

(30) Priorität: 06.12.1996 DE 19650701
(43) Veröffentlichungstag der Anmeldung: 10.06.1998
(73) Patentinhaber: Continental Aktiengesellschaft, 30165 Hannover (DE)
(72) Erfinder: Rodewald, Helmut, 31249 Rötzum (DE); Mundl, Reinhard, Dr., 30539 Hannover (DE)

(56) Entgegenhaltungen:
- EP-A- 0 696 521
- FR-A- 2 703 002
- PATENT ABSTRACTS OF JAPAN vol. 017, no. 123 (M-1380), 15. März 1993 (1993-03-15) & JP 04 306106 A (BRIDGESTONE CORP), 28. Oktober 1992 (1992-10-28)

## Beschreibung

Die vorliegende Erfindung betrifft einen Fahrzeugluftreifen mit profiliertem Laufstreifen mit Profilelementen, beispielsweise Blöcken, und mit Einschnitten. Die Einschnitte sollen in an sich bekannter Weise im wesentlichen in axialer Richtung verlaufen und - im Radialschnitt betrachtet - zickzackförmig gestaltet sein.

Reifen mit profiliertem Laufstreifen, deren Profilelemente jeweils mit einer Anzahl von Einschnitten versehen sind, bieten bekannterweise unter winterlichen Fahrbedingungen - etwa auf nasser, vereister oder verschneiter Straße - wesentlich besseren Griff als Reifen ohne oder mit weniger Einschnitten.

In aller Regel werden solche Einschnitte durch Anordnung entsprechender Feinbleche - Lamellen genannt - in den formenden Segmenten der Vulkanisationsform hergestellt, die beim Schließen der Form und/oder bei der Resterhebung des Reifens in die noch plastische Kautschukmischung des Laufstreifens "einschneiden" (angesichts der noch vorherrschenden Plastizität müsste es eigentlich "einprägen" heißen, aber "einschneiden" ist in DE der übliche Ausdruck).

Die Einschnitte in den meisten bekannten Reifen sind in der Draufsicht gerade, gewellt oder sägezahnförmig und verlaufen im Radialschnitt im wesentlichen senkrecht zur Laufstreifenoberfläche. Aus der EP-A-0 282 765 ist jedoch auch eine Ausführung bekannt mit Paaren jeweils spiegelbildlich zueinander angeordneter Einschnitte, die nach radial innen hin zickzackförmig verlaufen. Die jeweils entgegengesetzte Neigung entsprechender Abschnitte der paarigen Einschnitte soll den Griff auf winterlicher Straße verbessern.

Um die Reibung der aneinander grenzenden Wandungen der Einschnitte bei Deformationen - die durch Bremsen, Beschleunigen oder Kurvenfahren ausgelöst werden - zu erhöhen und dadurch den Reifenschlupf zu vermindern, schlägt EP-A-0 564 435 vor, dass die Wandungen der Einschnitte überwiegend rückspringende Flächenelemente aufweisen, welche in einem spitzen Winkel zur Laufstreifenoberfläche stehen, wobei die rückspringenden Flächenelemente der einen Wand gegensinnig zu jenen der anderen Wand angeordnet sind.

DE-OS 41 07 547 A1 lehrt Einschnitte, die im Radialschnitt (=Längsschnitt) ein 1-faches Zickzack beschreiben und so gewinkelt sind, dass an der Laufstreifenoberfläche ein Austrittswinkel von bis zu 60° und am Einschnittgrund ein "Eintauchwinkel" von bis zu 20° gebildet wird. Dabei ist der Eintauchwinkel von der Radialen aus in umgekehrtem Sinne gezählt wie der Austrittswinkel; umgerechnet in die gleiche Zählorientierung beträgt also der Winkel des radial inneren Abschnittes des Einschnittes zur Radialen mindestens 160°.

Insbesondere ist hier auch die FR-A-2 703 002 zu erwähnen, die einen Fahrzeugluftreifen
mit einem profilierten Laufstreifen mit Profilelementen zeigt,
die jeweils mit einer Anzahl von in der radialen Tiefe unverzweigten Einschnitten versehen sind, die im wesentlichen in axialer Richtung verlaufen und - im Radialschnitt betrachtet - zickzackförmig gestaltet sind,
wobei sich die Einschnitte aus einer alternierenden Abfolge von Abschnitten zusammensetzen,
von welchen die einen Abschnitte unter einem spitzen Winkel von 10° bis 50° und die anderen Abschnitte unter einem inversen Winkel von -10° bis -50° zu einer Senkrechten auf die Profiloberfläche verlaufen,
und wobei der inverse Winkel, den die anderen Abschnitte mit einer Senkrechten auf die Profiloberfläche einschließen, ohne Vorzeichenwechsel ausgedrückt zwischen 130° und 170° beträgt, und
wobei der - von der Profiloberfläche aus betrachtet - erste Abschnitt ein solcher ist, welcher unter einem spitzen Winkel zu einer Senkrechten auf die Profiloberfläche verläuft.

EP-PS 0 543 267 B1 offenbart Einschnitte, die sich bei etwa der Hälfte der Einschnitt-Tiefe verzweigen.

US-PS 4,794,965 zeigt im Radialschnitt zickzackförmige Einschnitte in jeweils paarweiser spiegelbildlicher Zuordnung zueinander. Jeder Schenkel soll in einem spitzen Winkel von dem Betrage nach höchstens 40° zur Radialen angeordnet sein bei von Schenkel zu Schenkel alternierendem Vorzeichen; als Komplementärwinkel ausgedrückt soll der Winkel also mindestens 140° betragen. Nach radial innen gehend soll außerdem von Schenkel zu Schenkel der Winkelbetrag abnehmen.

DE-OS 44 27 895 A1 schlägt Einschnitte vor, die sowohl in der Draufsicht als auch im Radialschnitt gewellt erscheinen, weil die Wellung diagonal ausgeführt ist, das heißt, die Wellenberge und -täler sich in der Querebene diagonal erstrecken.

Aus der DE-OS 29 08 219 ist es bekannt, dass quer angeordnete Einschnitte, die in der Drehrichtung des Reifens geneigt sind, den Kraftschluss für das (positive) Beschleunigen (also Geschwindigkeitszunahme) erhöhen, während entgegengesetzt geneigte Einschnitte den Kraftschluss für das Bremsen (=negatives Beschleunigen) erhöhen. Aus DE-PS 30 28 112 C2 ist ferner bekannt, im Laufflächen-Mittenbereich die Einschnitte auf die Übertragung der Bremskräfte hin zu optimieren und in den beiden Schulterbereichen auf die Übertragung der Beschleunigungskräfte.

Bekanntlich verringern Einschnitte die Steifigkeit der Profilelemente, in denen sie angeordnet sind. Dies ist für einige Beanspruchungen erwünscht, etwa für gute Traktion auf schneeigem Untergrund; für einige andere Beanspruchungen ist dies aber auch nachteilig, etwa beim Bremsen auf nassem Untergrund, wo Fahrzeugreifen mit den bislang bekannten Einschnittgestaltungen oft nicht befriedigend reagieren.

Darum stellt sich die Aufgabe, einen solchen Fahrzeugreifen zu gestalten, der den Kompromiss zwischen den grundsätzlich widerstreitenden Anforderungen auf ein höheres Niveau hebt.

Der Erfinder hat erkannt, dass diese Aufgabe am ehesten mit solchen Einschnitten in die Profilelemente der Lauffläche eines Fahrzeugreifens zu lösen ist, dass die verbleibende Steifigkeit der Profilelemente von der Beanspruchungsrichtung abhängt.

Detaillierter ausgedrückt wird die Aufgabe gelöst durch einen Fahrzeugluftreifen gemäß Anspruch 1, der folgende Merkmale aufweist:

Der erfindungsgemäße Reifen hat
a) einen profilierten Laufstreifen mit Profilelementen, beispielsweise Blöcken,
b) die jeweils mit einer Anzahl von in der radialen Tiefe unverzweigten Einschnitten (11) versehen sind, die im wesentlichen in axialer Richtung verlaufen und - im Radialschnitt betrachtet - zickzackförmig gestaltet sind,
c) wobei sich die Einschnitte (11) aus einer alternierenden, mindestens 2-fachen Abfolge von Abschnitten (11a, 11b) zusammensetzen,
d) von welchen die einen Abschnitte (11a) unter einem spitzen Winkel (Alpha) von höchstens 35° und die anderen Abschnitte (11b) unter einem größeren Winkel (Beta) zu einer Senkrechten auf die Profiloberfläche verlaufen,
e) wobei der größere Winkel (Beta), den die anderen Abschnitte (11b) mit einer Senkrechten auf die Profiloberfläche einschließen, zwischen 95° und 125° beträgt, und,
f) wobei der - von der Profiloberfläche aus betrachtet - erste Abschnitt (11a) ein solcher ist, welcher unter einem spitzen Winkel (Alpha) zu einer Senkrechten auf die Profiloberfläche verläuft.

Profilelemente mit derart gestalteten Einschnitten besitzen in Abhängigkeit von der Beanspruchungsrichtung, insbesondere in Abhängigkeit davon, ob die Beanspruchung in der einen oder in der anderen Orientierung der Umfangsrichtung erfolgt, sehr unterschiedliche Steifigkeiten. Erfolgt vom Untergrund aus betrachtet, auf welchem der Reifen abrollt, eine Kraftbeanspruchung gegen die Richtung der Neigung jener Abschnitte, die unter einem spitzen Winkel zur Profiloberfläche verlaufen, so wird das Profilelement derart verformt, dass sich die Einschnittwände im Bereich dieser Abschnitte zwar aneinander abstützen, dabei aber zum Teil aneinander abgleiten, also eine Schubbewegung gegeneinander ausführen. Bei dieser Beanspruchungsrichtung besitzt daher das Profilelement eine relativ geringe Steifigkeit.

Wird das gleiche Profilelement in entgegengesetzter Richtung beansprucht, dann reagiert es wesentlich steifer, da sich die Einschnittwände der unter einem stumpfen Winkel zur Profiloberfläche verlaufenden Abschnitte so gegeneinander abstützen, dass eine Schubbewegung im wesentlichen unterbunden ist. Dabei berührt das Profilelement den Untergrund mit einem größeren Teil seiner Oberfläche.

Nach einem gemäß Anspruch 2 bevorzugten Merkmal der Erfindung wird der Verlauf der Abschnitte der Einschnitte so aufeinander abgestimmt, dass die Differenz zwischen dem stumpfen Winkel, den die einen Abschnitte mit einer Senkrechten auf die Profiloberfläche einschließen, und dem spitzen Winkel, den die anderen Abschnitte mit einer Senkrechten auf die Profiloberfläche einschließen, zwischen 60° und 110°, besonders bevorzugt zwischen 80° und 100°, beträgt. Die so bemessene Winkeldifferenz begünstigt die Gleichmäßigkeit des Abriebes und begrenzt die Gefahr von Einrissen in den Einschnittwänden beim Entformen aus der Vulkanisationsform.

Um den Unterschied in der Steifigkeit des Profilelementes, wie oben erläutert je nach Beanspruchungsrichtung, möglichst optimal zu beeinflussen, sollte dabei der spitze Winkel, den die einen Abschnitte mit einer Senkrechten auf die Profiloberfläche einschließen, zwischen 15° und 35°, insbesondere zwischen 20° und 30°, gewählt werden. Für den stumpfen Winkel, den die anderen Abschnitte zu einer Senkrechten aur die Profiloberfläche einnehmen, gilt, daß dieser zwischen 95° bis 125°, insbesondere zwischen 100° und 120°, betragen sollte.

Dabei werden jene Abschnitte, die einen spitzen Winkel mit einer Senkrechten auf die Profiloberfläche einschließen, länger ausgeführt, als jene Abschnitte, die einen stumpfen Winkel mit einer Senkrechten auf die Profiloberfläche einschließen. Die Längendifferenz wird dabei bevorzugt so eingestellt, daß die Länge der längeren Abschnitte zwischen dem 1,4- bis 4-fachen der Länge der kürzeren Abschnitte beträgt.

Gemäß einem weiteren Merkmal der Erfindung erfolgt die Aneinanderreihung der einzelnen Abschnitte des Einschnittes derart, daß sie Einhüllende besitzen, die zumindest im wesentlichen senkrecht auf die Profilelement- bzw. Profiloberfläche verlaufen.

Um die oben beschriebenen Unterschiede der Steifigkeit je nach Beanspruchungsrichtung im gewünschten Ausmaß sicherzustellen, sollten dabei die Einschnitte bis auf eine Tiefe reichen, die mindestens 70% der Dessintiefe beträgt. Dabei ist es auch durchaus von Vorteil, wenn die Einschnitte bis auf eine Tiefe reichen, die sogar geringfügig größer ist als die Dessintiefe.

Ein erfindungsgemäß gestalteter Fahrzeugreifen wird bevorzugt mit einem drehrichtungsgebundenen Laufstreifenprofil versehen. Dabei ist die Abrollrichtung bevorzugt jene, die der Neigung der einen spitzen Winkel mit einer Senkrechten auf die Profiloberfläche einnehmenden Abschnitte entgegengesetzt ist. Aufgrund der sich ergebenden unterschiedlichen Schubsteifigkeit ist bei dieser bevorzugten Abrollrichtung nämlich gewährleistet, daß die Profilelemente bei Traktion die geringere Steifigkeit besitzen, wodurch durch die bereits geschilderte Deformation der Blöcke kleine Berührungsflächen mit hohem Druck vorliegen, was beispielsweise auf schneeiger oder matschiger Fahrbahn von Vorteil ist. Eine große Kontaktfläche zum Untergrund stellt sich daher bei der entgegengesetzten Beanspruchungsrichtung ein, was vor allem für das Bremsen auf glattem Untergrund, beispielsweise auf nasser Straße oder auf Eis, besonders günstig ist.

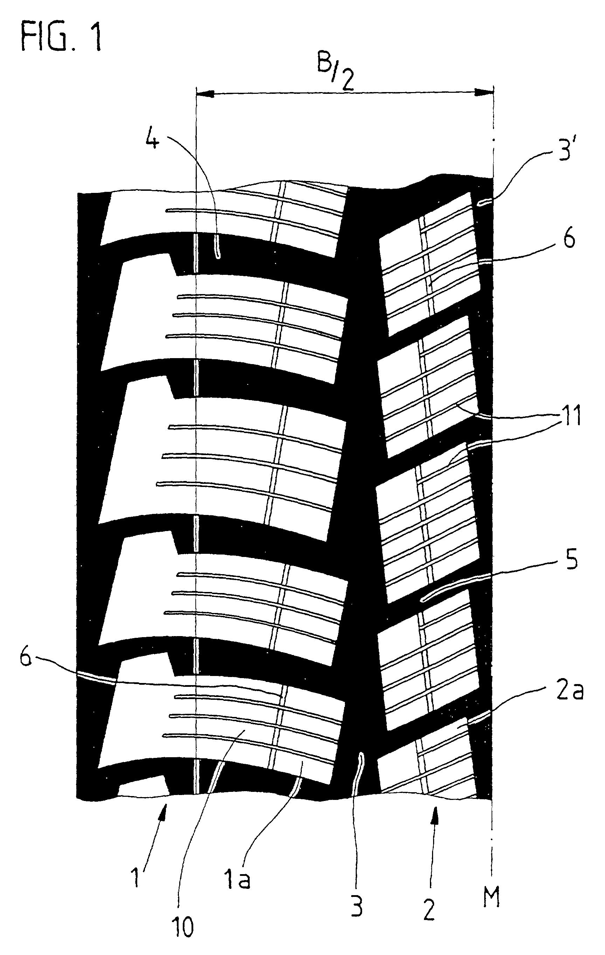

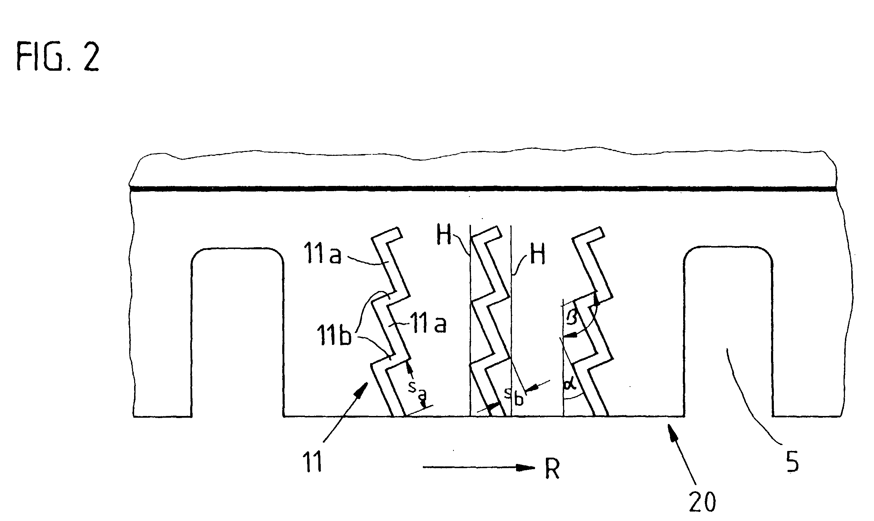

Weitere Merkmale, Vorteile und Einzelheiten der Erfindung werden nun anhand der Zeichnung, die ein Ausführungsbeispiel der Erfindung darstellt, näher beschrieben. Dabei zeigt Fig. 1 eine Draufsicht auf die Teilabwicklung der Hälfte eines erfindungsgemäß ausgeführten Laufstreifenprofiles für einen Fahrzeugluftreifen, Fig. 2 einen Schnitt durch einen Profilblock entlang der Linie A - A der Fig. 1, Fig. 3 und Fig. 4 in gleicher Darstellung den Profilblock aus Fig. 2 unter Einwirkung von bezüglich ihrer Richtungen entgegengesetzten Kräften.

Der in Fig. 1 dargestellte Teil eines Laufstreifens für einen erfindungsgemäßen Reifen besitzt eine Schulterblockreihe 1 und eine mittlere Blockreihe 2, die durch eine breite Umfangsnut 3 voneinander getrennt sind. Auch entlang der Mittelumfangslinie M-M des Reifens ist eine breite Umfangsnut 3' vorgesehen. Die Schulterblöcke 1a verlaufen dabei seitlich über den bodenberührenden Teil des Reifens (Laufstreifenbreite B = Breite in der Bodenaufstandsfläche gem. E.T.R.T.O. Standards) hinaus. Die Blöcke 1a in der Schulterblockreihe 1 sind in Umfangsrichtung voneinander durch breite Quernuten 4 getrennt. Auch zwischen den Blöcken 2a der mittleren Blockreihe 2 sind Quernuten 5 vorgesehen. Die Blöcke 1a sowie die Blöcke 2a besitzen beim dargestellten Ausführungsbeispiel, in Draufsicht betrachtet, im wesentlichen eine parallelogrammförmige oder rautenförmige Grundgestalt.

Die Blöcke 1a sowie die Blöcke 2a sind jeweils mit einer Anzahl von Einschnitten 10, 11 versehen, die in jedem Block 1a, 2a zumindest im wesentlichen parallel zueinander verlaufen, wobei ihre Anzahl pro Block mindestens 2, insbesondere zwischen 3 und 5, beträgt. Durch zusätzliche Nuten 6, die, wie bekannt, eine Breite zwischen 1 und 2mm und eine Tiefe von bis zu 2mm besitzen, erfolgt eine Entlüftung der Lamellenfeineinschnitte 10, 11. Zumindest ein Teil der Blöcke 1a, 2a, insbesondere jeweils sämtliche innerhalb einer Blockreihe 1, 2 verlaufende Einschnitte, sind, wie im nachfolgenden anhand der Figuren 2 bis 4 näher erläutert wird, besonders gestaltet. im dargestellten Ausführungsbeispiel sind dies zumindest die in den Blöcken 2a der mittleren Blockreihe 2 angeordneten Einschnitte 11.

In Draufsicht betrachtet besitzen die Einschnitte 11 einen geraden Verlauf, können jedoch auch leicht bogenförmig gekrümmt verlaufen, sie durchqueren ferner den jeweiligen Block 2a über seine gesamte Breite, können jedoch auch so angeordnet sein, daß sie einerends in eine der Umfangsnuten 3,3' einmünden und anderends innerhalb des Profilblockes 2a selbst enden. Fig. 2 zeigt nun einen Profilblock aus der mittleren Blockreihe 2 im Längsschnitt, der mit drei Einschnitten 11 versehen ist. Dargestellt sind ferner Teilbereiche der diesem Block 2a benachbarten Blöcke 2a und die die Blöcke 2a voneinander trennenden Quernuten 5. Die Einschnitte 11, die, wie es bei solchen Einschnitten im allgemeinen üblich ist, eine Breite von 0,4 bis 0,8 mm, insbesondere ca.0,5 mm, aufweisen, besitzen von der Profilblockoberfläche ausgehend einen zickzack-förmigen Verlauf. Die gegenseitige Anordnung der Einschnitte 11 innerhalb eines Profilblockes 2a erfolgt dabei derart, daß sie zumindest im wesentlichen parallel zueinander verlaufen. Die Zickzack-Form wird aus einer alternierenden Abfolge von längeren Abschnitten 11a und kürzeren Abschnitten 11b gebildet, wobei zumindest jeweils zwei solcher Abschnitte 11a und 11b vorgesehen sind. Beim dargestellten Ausführungsbeispiel besitzen die Einschnitte 11 jeweils drei längere Abschnitte 11a und drei kürzere Abschnitte 11b. Sowohl die Abschnitte 11a als auch die Abschnitte 11b sind, bei Betrachtung eines einzelnen Einschnittes 11, jeweils zueinander parallel angeordnet. Die Abschnitte 11a schließen dabei mit einer Lotrechten auf die Profiloberfläche bzw. die Blockoberfläche einen spitzen Winkel α ein, der im dargestellten Ausführungsbeispiel 25° beträgt. Der Winkel α kann jedoch auch größer oder kleiner als 25° gewählt werden, sollte jedoch, um die weiter unten noch beschriebene Wirkung der Einschnitte 11 sicherzustellen, in einem Bereich zwischen 15° und 35°, insbesondere zwischen 20° und 30°, gewählt werden.

Der an die Abschnitte 11 a jeweils anschließende Abschnitt 11b der Einschnitte 11 schließt mit einer Lotrechten auf die Profil- bzw. Blockoberfläche einen Winkel β ein, der im dargestellten Ausführungsbeispiel 115° beträgt, sodaß die Abschnitte 11b von den Abschnitten 11a jeweils unter einem Winkel von 90° abzweigen. Da die Abschnitte 11a und die Abschnitte 11b untereinander jeweils gleich lang gewählt sind ergibt sich ein Einschnittverlauf, bei dem Einhüllende H vorliegen, die ebenfalls lotrecht zur Profil- bzw. Blockoberfläche verlaufen. Der Winkel β sollte, um keine nachteiligen Auswirkungen auf den erwünschten gleichmäßigen Abrieb des Laufstreifens zu zeigen, mindestens 95° und höchstens 125° betragen. Die Differenz zwischen β und α legt gemeinsam mit dem gewählten Längenverhältnis der Abschnitte 11a, 11b den Verlauf und die gegenseitige Lage der kurzen und langen Abschnitte fest und sollte zwischen 60° und 110°, insbesondere zwischen 80° und 100°, gewählt werden.

Wie schon erwähnt sind beim dargestellten Ausführungsbeispiele die Abschnitte 11a und die Abschnitte 11b untereinander jeweils gleich lang. Das Verhältnis der Längen des kürzeren Abschnittes 11b zum längeren Abschnitt 11a wird in Abstimmung mit den Winkeln α,β bzw. der Winkeldifferenz β - α eingestellt, wobei die Länge sₐ der längeren Abschnitte 11a zwischen dem 1,4- bis etwa 4-fachen der Länge s_{b} der kürzeren Abschnitte 11b gewählt werden sollte.

Beim dargestellten Ausführungsbeispiel ist, wie bereits erwähnt, der Einschnittverlauf so gewählt, daß auch die Einhüllenden H senkrecht zur Profil- bzw. Blockoberfläche stehen. Abweichend von der dargestellten Ausführungsform kann die Anordnung der Einschnitte 11 auch so erfolgen, daß ihre Einhüllenden unter einem spitzen Winkel, der bis zu 25° betragen kann, zu einer Senkrechten auf die Profil- bzw. Blockoberfläche verlaufen.

Beim dargestellten Ausführungsbeispiel reichen ferner die drei im Block vorgesehenen Einschnitte 11 bis auf eine Tiefe, die größer ist als die sonstige Dessintiefe, die hier der Tiefe der Quernuten entspricht, die im allgemeinen zwischen 8 und 9 mm gewählt wird. Dies hat den Vorteil, daß über die Gesamtlebensdauer des Reifens die noch zu beschreibende Wirkung der Einschnitte 11 erhalten bleibt. Die Einschnitte 11 sollten sich daher auch zumindest bis in eine Tiefe erstrecken, die 70% der Dessintiefe beträgt.

Abweichend von der gezeigten Ausführungsform können ferner die Einschnitte 11 auch so gestaltet werden, bzw. einen solchen Verlauf besitzen, daß sich der Abstand ihrer Einhüllenden H mit zunehmender Einschnittiefe verringert. Dies wird im allgemeinen damit einher gehen, daß sowohl die längeren als auch die kürzeren Abschnitte der Einschnitte 11 mit fortschreitender Tiefe kürzer werden. Dabei kann ferner der, von der Blockoberfläche aus betrachtet, erste Abschnitt 11a kürzer ausgeführt werden, als die weiteren Abschnitte 11a.

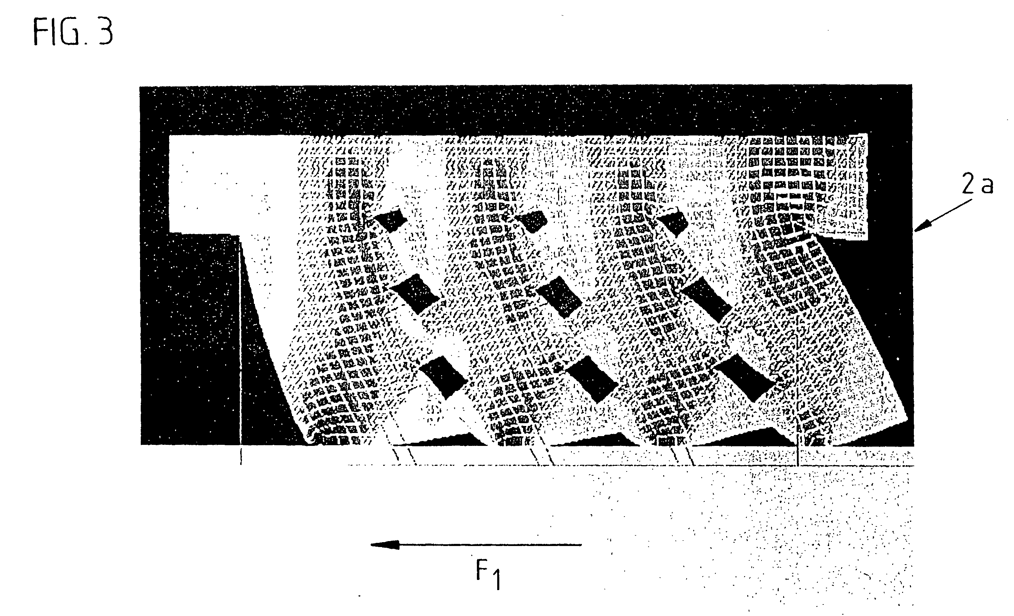

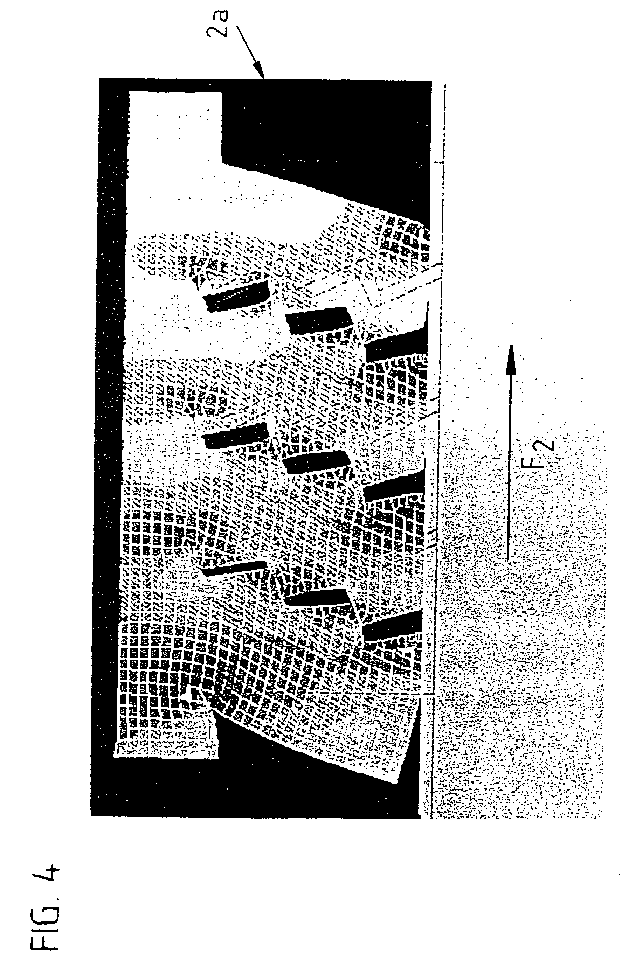

Wie nun anhand der Figuren 3 und 4 näher erläutert wird, besitzen Profilblöcke mit derartigen Einschnitten 11, bei Beanspruchung bzw. Krafteinwirkung in den beiden entgegengesetzten Umfangsrichtungen unterschiedliche Schubsteifigkeiten.

Fig. 3 zeigt den Profilblock 2a unter Einwirkung einer vom Boden bzw. Untergrund auf den Block 2a in Richtung des Pfeiles F₁ wirkenden Kraft. Die Kraftbeanspruchung erfolgt entgegen der Richtung der Neigung der Abschnitte 11a der Einschnitte 11. Der Profilblock 2a wird derart verformt, daß sich die Einschnittwände im Bereich der längeren Abschnitte 11a aneinander abstützen und gegeneinander etwas verschieben und die Einschnittwände im Bereich der kürzeren Abschnitte 11b ihren gegenseitigen Abstand vergrößern. Der Kontakt des Blockes 1a zum Untergrund erfolgt daher bei dieser Beanspruchungsrichtung über sehr kleine Flächen im Bereich der Ausmündungen der Einschnitte 11, man könnte hier von einer "Linienberührung" sprechen. Bei dieser Beanspruchungsrichtung weist der Profilblock somit eine relativ geringe Schubsteifigkeit auf, auf Grund der "Linienberührung" zum Untergrund einen hohen Reibbeiwert auf nachgiebiger Oberfläche, beispielsweise auf einer Schneefahrbahn. Im Bereich der Berührungsflächen zum Untergrund liegen daher auch hohe Drücke vor.

Fig. 4 zeigt das Verhalten des gleichen Blockes 2a unter Einwirkung einer Kraft in Richtung des Pfeiles F₂, der entgegengesetzt zum Pfeil F₁ aus Fig. 3 gerichtet ist. Der Profilblock 2a zeigt dabei infolge der erfindungsgemäßen Ausgestaltung der Einschnitte 11 ein wesentlich steiferes Verhalten. Wie dargestellt vergrößert sich bei dieser Beanspruchungsrichtung der Abstand der Einschnitt-wände im Bereich der längeren Abschnitte 11a, im Bereich der kürzeren Abschnitte 11b erfolgt ein gegenseitiges Abstützen der Einschnittwände. Der Profilblock 2a liegt über einen Großteil seiner Oberfläche auf dem Untergrund satt auf. Es erfolgt daher eine flächige Berührung des Blockes 2a zum Untergrund. Somit ist der Reibbeiwert auf starrer Oberfläche, beispielsweise auf vereister oder nasser Fahrbahn, hoch.

Die anhand der Fig. 3 und 4 aufgezeigte unterschiedliche Schubsteifigkeit läßt sich zusammen mit der sich daraus ergebenden Art der Berührung mit dem Untergrund in der Praxis besonders vorteilhaft umsetzen. Ein hoher, möglichst entlang von kleinen Flächen ("Linienberührung") wirkender Druck eines Profilblockes zum Untergrund ist vor allem für gute Traktionseigenschaften des Reifens unter winterlichen Bedingungen von Vorteil, da dadurch ein Eingraben auf Schnee oder Matsch und somit der erwünschte Griff gewährleistet sind. Die sich bildende große Kontaktfläche zum Untergrund bei einer entgegengesetzten Beanspruchungsrichtung und die, wie geschildert, damit einhergehende größere Schubsteifigkeit des Profilblockes ist für das Bremsen auf glattem Untergrund, beispielsweise auf einer nassen Straße oder auch auf Eis von Vorteil.

Ein Laufstreifenprofil mit Profilelementen, die mit derartigen Einschnitten 11 versehen sind, wird daher bevorzugt als drehrichtungsgebundenes, eine bevorzugte Abrollrichtung aufweisendes Laufstreifenprofil ausgelegt, und zwar im Sinne der obigen Überlegungen derart, daß die Abrollrichtung der Richtung des Pfeiles R in Fig. 2 entspricht.

Bezüglich des gegenseitigen Abstandes der Einschnitte 11 und des Abstandes derselben zu den von Quernuten begrenzten Blockkanten kann der Fachmann auf Erfahrungswerte zu Profilblöcken mit herkömmlich gestalteten Einschnitten zurückgreifen. Im allgemeinen ist es günstig, die Einschnitte 11 bezüglich ihres gegenseitigen Abstandes und ihres Abstandes zu den Blockkanten möglichst gleichmäßig im Profilblock zu verteilen, wobei es sich bei Blockkanten möglichst gleichmäßig im Profilblock zu verteilen, wobei es sich bei erfindungsgemäß gestalteten Einschnitten als günstig herausgestellt hat, wenn die Abstände zu den Blockkanten etwas größer gewählt werden, als die gegenseitigen Abstände der Einschnitte 11.

## Patentansprüche

1. Fahrzeugluftreifen
a) mit einem profilierten Laufstreifen mit Profilelementen, beispielsweise Blöcken,
b) die jeweils mit einer Anzahl von in der radialen Tiefe unverzweigten Einschnitten (11) versehen sind, die im wesentlichen in axialer Richtung verlaufen und - im Radialschnitt betrachtet - zickzackförmig gestaltet sind,
c) wobei sich die Einschnitte (11) aus einer alternierenden, mindestens 2-fachen Abfolge von Abschnitten (11a, 11b) zusammensetzen,
d) von welchen die einen Abschnitte (11a) unter einem spitzen Winkel (Alpha) von höchstens 35° und die anderen Abschnitte (11b) unter einem größeren Winkel (Beta) zu einer Senkrechten auf die Profiloberfläche verlaufen, und
e) wobei der größere Winkel (Beta), den die anderen Abschnitte (11b) mit einer Senkrechten auf die Profiloberfläche einschließen, zwischen 95° und 125° beträgt, und,
f) wobei der - von der Profiloberfläche aus betrachtet - erste Abschnitt (11a) ein solcher ist, welcher unter einem spitzen Winkel (Alpha) zu einer Senkrechten auf die Profiloberfläche verläuft.

2. Fahrzeugluftreifen nach Anspruch 1, **dadurch gekennzeichnet, dass** die Differenz zwischen dem größeren Winkel (Beta), den die einen Abschnitte (11b) mit einer Senkrechten auf die Profiloberfläche einschließen, und dem spitzen Winkel (Alpha), den die anderen Anbschnitte (11a) mit einer Senkrechten auf die Profiloberfläche einschließen, zwischen 60° und 110°, besonders bevorzugt zwischen 80° und 100°, beträgt.

3. Fahrzeugluftreifen nach Anspruch 1 oder 2, **dadurch gekennzeichnet, dass** der größere Winkel (Beta), den die anderen Abschnitte (11b) mit einer Senkrechten auf die Profiloberfläche einschließen, zwischen 100° und 120° beträgt.

4. Fahrzeugluftreifen nach einem der Ansprüche 1 bis 3, **dadurch gekennzeichnet, dass** jene Abschnitte (11a), die einen spitzen Winkel (Alpha) mit einer Senkrechten auf die Profiloberfläche einschließen, länger ausgeführt sind, als jene Abschnitte (11b), die einen stumpfen Winkel (Beta) mit einer Senkrechten auf die Profiloberfläche einschließen.

5. Fahrzeugluftreifen nach Anspruch 4, **dadurch gekennzeichnet, dass** die Länge der längeren Abschnitte (11a) zwischen dem 1,4- bis 4-fachen der Länge der kürzeren Abschnitte (11b) beträgt.

6. Fahrzeugluftreifen nach einem der Ansprüche 1 bis 5, **dadurch gekennzeichnet, dass** die Einschnitte (11) Einhüllende (H) besitzen, die zumindest im wesentlichen senkrecht auf die Profilelement- bzw. Profiloberfläche verlaufen.

7. Fahrzeugluftreifen nach einem der Ansprüche 1 bis 6, **dadurch gekennzeichnet, dass** die Einschnitte (11) bis auf eine Tiefe reichen, die mindestens 70 % der Dessintiefe beträgt.

8. Fahrzeugluftreifen nach einem der Ansprüche 1 bis 7, **dadurch gekennzeichnet, dass** die Einschnitte (11) bis auf eine Tiefe reichen, die geringfügig größer ist als die Dessintiefe.

9. Fahrzeugluftreifen nach einem der Ansprüche 1 bis 8 mit einem drehsinngebundenen Laufstreifenprofil, **dadurch gekennzeichnet, dass** der Drehsinn zur Neigung jener Abschnitte (11a) der Einschnitte (11), die einen spitzen Winkel (Alpha) mit einer senkrechten auf die Profiloberfläche einnehmen, entgegengesetzt ist.

## Claims

1. Pneumatic vehicle tyre,
a) having a profiled tread strip with profile elements, for example blocks,
b) which are each provided with a number of incisions (11), which are unbranched in the radial depth, said incisions extending substantially in the axial direction and - when viewed in radial section - having a zigzag-shaped configuration,
c) the incisions (11) comprising an alternating sequence, at least a 2-times sequence, of portions (11a, 11b),
d) of which the one portions (11a) extend at an acute angle (alpha) of 35° at most, and the other portions (11b) extend at a greater angle (beta) relative to a line perpendicular to the profile surface,
e) the greater angle (beta), which the other portions (11b) form with a line perpendicular to the profile surface, being between 95° and 125°, and
f) the first portion (11a) - when viewed from the profile surface - being one which extends at an acute angle (alpha) relative to a line perpendicular to the profile surface.

2. Pneumatic vehicle tyre according to claim 1, **characterised in that** the difference between the greater angle (beta), which the one portions (11b) form with a line perpendicular to the profile surface, and the acute angle (alpha), which the other portions (11a) form with a line perpendicular to the profile surface, is between 60° and 110°, particularly preferably between 80° and 100°.

3. Pneumatic vehicle tyre according to claim 1 or 2, **characterised in that** the greater angle (beta), which the other portions (11b) form with a line perpendicular to the profile surface, is between 100° and 120°.

4. Pneumatic vehicle tyre according to one of claims 1 to 3, **characterised in that** those portions (11a) which form an acute angle (alpha) with a line perpendicular to the profile surface are longer than those portions (11b) which form an obtuse angle (beta) with a line perpendicular to the profile surface.

5. Pneumatic vehicle tyre according to claim 4, **characterised in that** the length of the longer portions (11a) is between 1.4-times and 4-times the length of the shorter portions (11b).

6. Pneumatic vehicle tyre according to one of claims 1 to 5, **characterised in that** the incisions (11) have outlines (H) which extend at least substantially perpendicularly relative to the profile element surface or profile surface respectively.

7. Pneumatic vehicle tyre according to one of claims 1 to 6, **characterised in that** the incisions (11) extend to a depth which is at least 70 % of the pattern depth.

8. Pneumatic vehicle tyre according to one of claims 1 to 7, **characterised in that** the incisions (11) extend to a depth which is slightly greater than the pattern depth.

9. Pneumatic vehicle tyre according to one of claims 1 to 8, having a tread strip profile adapted to the direction of rotation, **characterised in that** the direction of rotation is opposite to the inclination of those portions (11a) of the incisions (11) which form an acute angle (alpha) with a line perpendicular to the profile surface.

## Revendications

1. Bandage pneumatique pour véhicule
a) présentant une bande de roulement profilée comportant des éléments profilés, par exemple des blocs,
b) dont chacun présente un certain nombre d'incisions (11) qui ne se ramifient pas en profondeur radiale, sont sensiblement orientées selon la direction axiale et - vu en coupe radiale - sont en forme de zigzag,
c) dans lequel les incisions (11) se composent d'une succession alternante, au module d'au moins deux, de tronçons (11a, 11b),
d) dont certains des tronçons (11a) font un angle aigu (alpha) d'au maximum 35°, et les autres tronçons (11b), un angle (bêta) plus grand, avec la perpendiculaire à la surface profilée,
e) dans lequel l'angle plus grand (bêta) que font les autres tronçons (11b) avec la perpendiculaire à la surface profilée vaut entre 95° et 125°, et,
f) dans lequel le premier - vu depuis la surface profilée - tronçons (11a) est celui qui fait un angle aigu (alpha) avec la perpendiculaire à la surface profilée.

2. Bandage pneumatique pour véhicule selon la revendication 1, **caractérisé par** le fait que la différence entre l'angle plus grand (bêta), que font certains des tronçons (11b) avec la perpendiculaire à la surface profilée, et l'angle aigu (alpha) que font les autres tronçons (11a) avec la perpendiculaire à la surface profilée, vaut entre 60° et 110°, de préférence particulière, entre 80° et 100°.

3. Bandage pneumatique pour véhicule selon la revendication 1 ou 2, **caractérisé par** le fait que l'angle plus grand (bêta) que font les autres tronçons (11b) avec la perpendiculaire à la surface profilée, vaut entre 100° et 120°.

4. Bandage pneumatique pour véhicule selon l'une des revendications 1 à 3, **caractérisé par** le fait que les tronçons (11a) qui font un angle aigu (alpha) avec la perpendiculaire à la surface profilée sont exécutés plus longs que les tronçons (11b) qui font un angle obtus (bêta) avec la perpendiculaire à la surface profilée.

5. Bandage pneumatique pour véhicule selon la revendication 4, **caractérisé par** le fait que la longueur des plus longs tronçons (11a) vaut entre 1,4 à 4 fois la longueur des tronçons plus courts (11b).

6. Bandage pneumatique pour véhicule selon l'une des revendications 1 à 5, **caractérisé par** le fait que les incisions (11) présentent des enveloppes (h) qui sont au moins sensiblement orientées perpendiculairement à l'élément profilé ou à la surface profilée.

7. Bandage pneumatique pour véhicule selon l'une des revendications 1 à 6, **caractérisé par** le fait que les incisions (11) vont jusqu'à une profondeur qui vaut au moins 70 % de la profondeur des cannelures.

8. Bandage pneumatique pour véhicule selon l'une des revendications 1 à 7, **caractérisé par** le fait que les incisions (11) vont jusqu'à une profondeur qui est légèrement supérieure à la profondeur des cannelures.

9. Bandage pneumatique pour véhicule selon l'une des revendications 1 à 8, présentant un profil de bande de roulement lié au sens de rotation, **caractérisé par** le fait que le sens de rotation est opposé à l'inclinaison des tronçons (11a) des incisions (11) qui font un angle aigu (alpha) avec la perpendiculaire à la surface profilée.
